# EUROPEAN PATENT SPECIFICATION

(11) **EP 2 889 609 B1**
(45) Date of publication and mention of the grant of the patent: **24.02.2021**
(21) Application number: 14199417.8
(22) Date of filing: 19.12.2014
(51) Int. Cl.: G01N 21/65

(54) **Pesticide residue detection method**
Pestizidrückstandsnachweisverfahren
Procédé de détection de résidus pesticides

(30) Priority: 30.12.2013 CN 201310746277
(43) Date of publication of application: 01.07.2015
(73) Proprietor: Nuctech Company Limited, TongFang Building, Shuangqinglu, Haidian District Beijing 100084 (CN); Tsinghua University, Haidian District Beijing (CN)
(72) Inventor: Zhang, Li, Beijing 100084 (CN); Jiang, Li, Beijing 100084 (CN); Zhang, Jianhong, Beijing 100084 (CN); Wang, Hongqiu, Beijing 100084 (CN); Yi, Yumin, Beijing 100084 (CN)
(74) Representative: Elzaburu S.L.P.

(56) References cited:
- WO-A1-2010/057212
- CN-A- 103 411 953
- CN-A- 103 472 049
- US-A1- 2010 114 514
- LEE ET AL: "Fast and sensitive trace analysis of malachite green using a surface-enhanced Raman microfluidic sensor", ANALYTICA CHIMICA ACTA, ELSEVIER, AMSTERDAM, NL, vol. 590, no. 2, 28 March 2007 (2007-03-28), pages 139-144, XP022209812, ISSN: 0003-2670, DOI: 10.1016/J.ACA.2007.03.049
- CHETAN SHENDE, FRANK INSCORE, ALAN GIFT, PAUL MAKSYMIUK, AND STUART FARQUHARSON: "Analysis of pesticides on or in fruit by surface-enhanced Raman spectroscopy", SPIE, PO BOX 10 BELLINGHAM WA 98227-0010 USA, vol. 5587, 2004, pages 170-176, XP040192573,
- LI YONGYU ET AL: "Rapid detection of pesticide residue in apple based on Raman spectroscopy", SENSING FOR AGRICULTURE AND FOOD QUALITY AND SAFETY IV, SPIE, 1000 20TH ST. BELLINGHAM WA 98225-6705 USA, vol. 8369, no. 1, 11 May 2012 (2012-05-11) , pages 1-6, XP060002616, DOI: 10.1117/12.918527 [retrieved on 2012-05-07]
- SAGAR DHAKAL ET AL: "Prototype instrument development for non-destructive detection of pesticide residue in apple surface using Raman technology", JOURNAL OF FOOD ENGINEERING, vol. 123, 29 September 2013 (2013-09-29), pages 94-103, XP055199391, ISSN: 0260-8774, DOI: 10.1016/j.jfoodeng.2013.09.025

## Description

### BACKGROUND OF THE INVENTION

### Field of the invention

The present disclosure relates to the field of pesticide residue detection, and in particular, to a method for detecting pesticide residue in foods using Raman spectroscopy.

### Description of the Related Art

Pesticides play an important role in insect disease prevention of crops and thus produce great benefit for agriculture. However, excessive use of pesticides is harmful to the environment and food security. Many countries around the world have regulations for maximum limit of relative pesticide residue. It is crucial to detect the pesticide residue. Presently, analysis and detection of the pesticide residue are mainly achieved by instruments in the lab. In many cases, such as in-situ detection, it is significant to establish a fast, convenient and low cost method for determination of pesticide residues is.

Document US2010/114514A1 discloses a method for providing quality assurance in an industrial process, e.g. in a food production process . The method includes obtaining a manufacturing material from the industrial process, obtaining a Raman spectrum from the manufacturing material in contact with a nano-scale surface using a spectrometer, searching for, using a spectral analyzer, a spectral signature of a harmful substance, e.g. residue pesticides, in a predetermined spectral region in the Raman spectrum to determine the existence of the harmful substance in the manufacturing material, determining the concentration of the manufacturing material if the spectral signature is found in the Raman spectrum, and rejecting the manufacturing material from the industrial process if the concentration of the manufacturing material is determined to be above a predetermined tolerance level.

An article (LEE et al. "Fast and sensitive trace analysis of malachite green using a surface-enhanced Raman microfluidic sensor", ANALYTICA CHIMICA ACTA, ELSEVIER, AMSTERDAM, NL, vol. 590, no. 2, 28 March 2007) discloses a rapid and highly sensitive trace analysis technique for determining malachite green (MG) in a polydimethylsiloxane microfluidic sensor using surface-enhanced Raman spectroscopy. A quantitative analysis of MG was performed based on the measured peak height at 1615cm⁻¹ in its SERS spectrum. The limit of detection, using the SERS microfluidic sensor, was found to be below the 1-2ppb level.

Document WO2010/057212A1 discloses a method of detecting melamine which includes providing a quantity of SERS-active particles and mixing the SERS-active particles with a solution containing melamine. The method further includes detecting a surface enhanced Raman spectrum of the melamine, and may optionally include concentration of the SERS-active particles.

Document CN103411953A discloses a method for carrying out rapid detection of different pesticides in a pesticide emulsion preparation. According to the method, effective constituents and constituent concentrations of the pesticide emulsion preparation and prohibited constituents of the pesticide emulsion preparation are detected based on Raman spectroscopy.

Document CN103472049A discloses an organophosphorus detection method based on a hollow-core fiber. The method comprises following steps: an organophosphorus sample solution is injected into the hollow-core fiber, wherein the inner wall of the hollow-core fiber is provided with nanoparticles; incidence of exciting light is performed through one end of the hollow-core fiber, and emergent light, which is enforced by total reflection of the inner wall of the hollow-core fiber and the nanoparticles, is detected by a Raman spectrum acquisition system at the other end so as to obtain a Raman spectrum; the Raman spectrum is analyzed, the kind of the organophosphorus sample is determined based on the change of Raman peak positions, and the concentration of the organophosphorus sample is determined based on the intensity of Raman peaks.

### SUMMARY OF THE INVENTION

An object of the present invention is to provide a pesticide residue detection method using Raman spectroscopy, which may determine the compositions and concentrations of the pesticide residue in foods quickly, accurately and in high efficiency.

In order to achieve the above object, a method according to claim 1, which defines the present invention, is employed, wherein embodiments of the present invention may be implemented as follows:

In an embodiment, the reference Raman spectrum library may comprise reference Raman spectra of food systems containing pesticide residue of known compositions and concentrations and/or reference Raman spectra of food systems excluding any pesticide residue.

In an embodiment, the pesticide residue detection method may further comprise the following step between the step (o) and the step (a):
(p) establishing a table, graph or function of the concentrations of pesticide residue vs. the peak intensities or peak areas of the characterizing peaks in the Raman spectrum on basis of the reference Raman spectra of the reference samples containing pesticide of known compositions and concentrations.

In an embodiment, the sample to be detected is formed by mixing a process fluid of food to be detected with a nano-enhancement material.

In an embodiment, the process fluid of food to be detected may be produced by carrying out a crush and extraction process on the food to be detected.

In an embodiment, the process fluid of food to be detected is purified and concentrated before it is mixed with the nano-enhancement material.

In an embodiment, the nano-enhancement material may comprise a metal nano-material, the metal comprising gold, silver, copper, iron, cobalt, nickel, palladium or platinum or any combination thereof.

In any one of the above embodiments, the compositions and concentrations of the pesticide residue in the sample to be detected are detected using Raman spectroscopy.

It may achieve an effective, convenient and accurate inspection of the pesticide residue in foods such as fruits or vegetables, in particular suitable for rapid detection.

### BRIEF DESCRIPTION OF THE DRAWINGS

Fig.1 is a schematic flow chart of a pesticide residue detection method comprising features of the present invention;
Fig. 2 shows a schematic flow chart of a method for determining the composition and concentration of pesticide residue in a sample to be detected comprising features of the present invention;
Fig. 3 shows a schematic flow chart of a method for determining the composition and concentration of pesticide residue in a sample to be detected ;
Fig. 4 shows schematically reference Raman spectrum graphs of phosmet of different concentrations;
Fig. 5 is a graph schematically showing a relation between the concentration and peak intensity of the characterizing peaks of the reference Raman spectra of phosmet; and
Fig. 6 shows schematically Raman spectrum graphs of process fluid of apples containing pesticide of isocarbophos of different concentrations.

### DETAILED DESCRIPTION OF PREFERRED EMBODIMENTS OF THE INVENTION

Exemplary embodiments of the present invention will be described hereinafter in detail with reference to the attached drawings, wherein the like reference numerals refer to the like elements. The present invention may, however, be embodied in many different forms and should not be construed as being limited to the embodiment set forth herein; rather, these embodiments are provided so that the present invention will be thorough and complete.

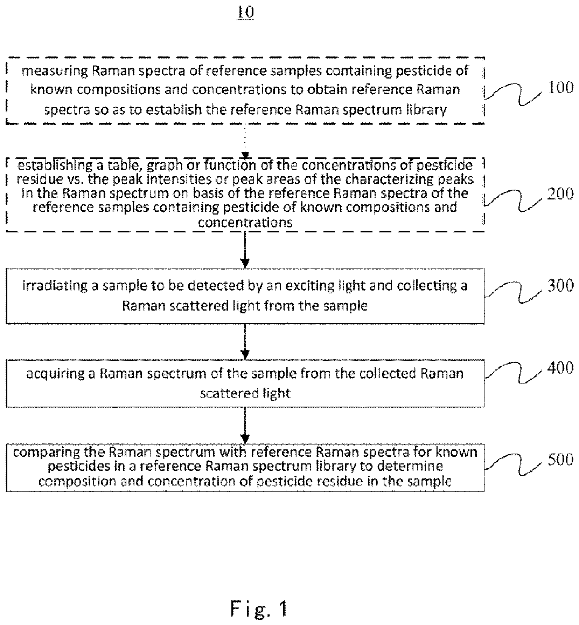

Fig.1 is a schematic flow chart of a pesticide residue detection method comprising features of the present invention. The pesticide residue detection method 10 includes (as illustrated in solid blocks in Fig. 1):
Step 300: irradiating a sample to be detected by an exciting light and collecting a Raman scattered light from the sample;
Step 400: acquiring a Raman spectrum of the sample from the collected Raman scattered light; and
Step 500: comparing the Raman spectrum with reference Raman spectra for known pesticides in a reference Raman spectrum library to determine composition and concentration of the pesticide residue in the sample.

The pesticide residue detection method 10 according to the present invention further includes steps (as illustrated in dashed block 100 in Fig. 1):
Step 100: measuring Raman spectra of reference samples containing pesticide of known compositions and concentrations to obtain reference Raman spectra so as to establish the reference Raman spectrum library.

The Step 100 is performed along with the subsequent Steps 300-500 in the same field, that is, the step of establishing the reference Raman spectrum library is performed in the field of detecting the pesticide residue. In this way, the consistency and stability of the detection conditions for the reference samples and those for the sample to be detected are ensured to the largest extent. In examples not forming part of the present invention, in order to reduce field detection time and procedures, the reference Raman spectrum library may not be established in the field of detecting the pesticide residue, but may be established in advance (for example in the lab) in accordance with measurements of reference samples. In addition, for example, commercially available standard Raman spectrum library may also be used as the reference Raman spectrum library in other examples not forming part of of the present invention. The reference Raman spectrum library may be replaced or replenished as requirement of detection (for example, new species of pesticides).

In order to detect the concentration of pesticide residue, the reference Raman spectrum library needs to contain reference Raman spectra for different concentrations of the pesticide. In contrast, in the conventional Raman spectrum detection, only species of pesticide are detected, but the concentrations are not detected. Thus, the reference Raman spectrum library for comparison will not contain Raman spectra for different concentrations. Further, in the pesticide residue detection, the pesticide residue is mixed in different food systems, including food components for example fatty acid, carbohydrate, organic acid and additives such as pigment or antiseptics, the Raman spectra of the sample to be detected may also be affected by different food systems(such as different types of foods). In order to eliminate the influence of the different food systems on the detection results, the reference Raman spectrum library includes reference Raman spectra of food systems containing pesticide residue of known compositions and concentrations, and optionally reference Raman spectra of food systems excluding any pesticide residues. The detection results of the sample to be detected are compared with the reference Raman spectra of food systems containing pesticide residue of known compositions and concentrations and calculations are made on basis of them. From the reference Raman spectra of the food systems excluding any pesticide residues, the effects of different food systems to the Raman spectra may be derived and the effects may be used in seeking and determining the characterizing peak corresponding to the pesticide residue in the Raman spectrum of the sample to be detected.

It should be noted that the above term of "food systems" may include one kind of food, for example, fruit, vegetable, cake, or may include a plurality kinds of foods, even a mixture of a plurality of kinds of foods.

In order to improve the concentration detection of the pesticide residue, as an example, the pesticide residue detection method according to an embodiment of the present invention may further include the Step 200 (as illustrated by the dashed block 200 in Fig. 1): establishing a table, graph or function of the concentrations of pesticide residue vs. the peak intensities or peak areas of the characterizing peaks in the Raman spectra on basis of the reference Raman spectra of the reference samples containing pesticide of different concentrations.

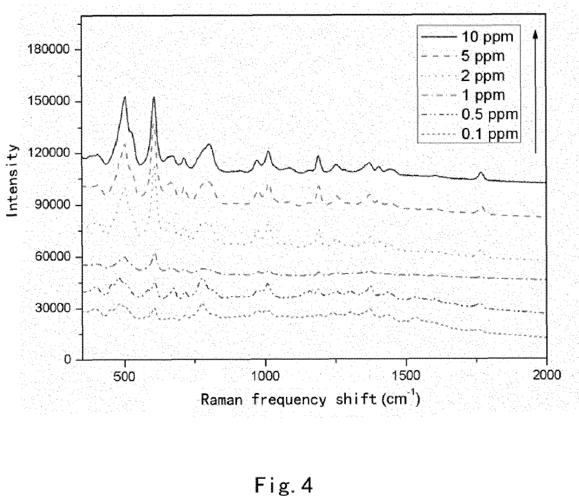

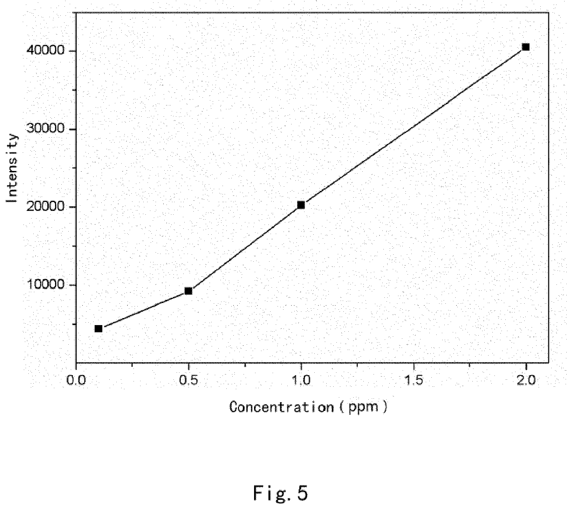

As an example, Fig. 4 provides Raman spectra of pesticide of phosmet with different concentrations. It shows Raman spectra of pesticide of phosmet with concentrations of 10ppm, 5ppm, 2ppm, 1ppm, 0.5ppm and 0.1ppm. As can be seen from Fig. 4, the peak intensities of the characterizing peaks in the Raman spectra are increased as the concentrations increase, and the characterizing peak may still be observed even when the pesticide concentration is as low as 0.1ppm. On the other hand, the peak positions of the characterizing peaks (i.e., the position of frequency shift the characterizing peak corresponds to) do not change as the pesticide concentrations vary. Thus, for example, the characterizing peak at 609cm⁻¹ may be selected to establish the diagram between the peak intensity and the pesticide concentration, as illustrated in Fig. 5. Although in Fig. 5 the relation between the peak intensity of the characterizing peak and the pesticide concentration is established on basis of a linear relation, it is only an example. Alternatively, the relation of the peak intensity and the pesticide concentration may also be established by other means, for example, may be established by fitting on basis of such as second order or more order curve, parabola, or by listing tables, or in the form of function.

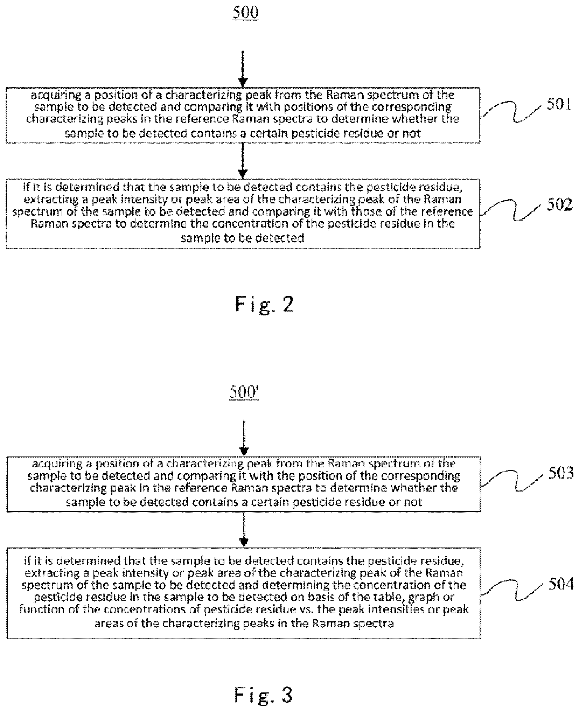

Fig. 5 explains the relation between the peak intensity of the characterizing peak and the pesticide concentration which is established only with reference to the characterizing peak at 609cm⁻¹. However, it is only an example. For example, the characterizing peak at other peak positions in Fig. 4 may be selected to establish the relation between the peak intensity and the pesticide concentration, or the relation between the peak area and the pesticide concentration may be established. Extraction of the peak area is more complex than extraction of peak intensity, but it may be less influenced by noise signals. The Step 500 further includes (as illustrated in Fig. 2):
Step 501: acquiring a position of a characterizing peak from the Raman spectrum of the sample to be detected and comparing it with the position of the corresponding characterizing peaks in the reference Raman spectra to determine whether the sample to be detected contains a certain pesticide residue or not; and
Step 502: if it is determined that the sample to be detected contains the pesticide residue, extracting a peak intensity or peak area of the characterizing peak of the Raman spectrum of the sample to be detected and comparing it with those of the reference Raman spectra to determine the concentration of the pesticide residue in the sample to be detected.

In the case that the relation between the peak intensity of the characterizing peak and the pesticide concentration has been established, the relation may also be used to determine the concentration of the pesticide residue in the sample to be detected, that is, the Step 500' of comparing the Raman spectrum with reference Raman spectra for known pesticides to determine composition and concentration of the pesticide residue in the sample to be detected may alternatively include (as illustrated in Fig. 3):
Step 503: acquiring a position of a characterizing peak from the Raman spectrum of the sample to be detected and comparing it with the position of the corresponding characterizing peaks in the reference Raman spectra to determine whether the sample to be detected contains a certain pesticide residue or not; and
Step 504: if it is determined that the sample to be detected contains a certain pesticide residue, extracting a peak intensity or peak area of the characterizing peak of the Raman spectrum of the sample to be detected and determining the concentration of the pesticide residue in the sample to be detected on basis of the table, graph or function of the concentrations of pesticide residue vs. the peak intensities or peak areas of the characterizing peaks in the Raman spectra .

The pesticide residue detection method according to the embodiment of the present invention is easy and convenient to be performed, and has an accurate detection result due to the characteristics of Raman scattered light. The pesticide residue in foods can be detected by extracting small amount of samples from foods such as fruits, vegetables and the like.

In an example, in order to enhance the intensity of the Raman scattered light, the sample to be detected may be formed by mixing a process fluid of food to be detected with nano-enhancement material. The nano-enhancement material may include such as a metal nano-material, the metal including gold, silver, copper, iron, cobalt, nickel, palladium or platinum or any combination thereof. Certainly, this is not necessary. Instead, the sample to be detected may not include nano-enhancement material.

In an example, the process fluid of food to be detected is produced by carrying out a crush and extraction process on the food to be detected. For example, the crush process may be done by mechanically crushing. For example, the extraction process may be done using an organic extraction agent. As an example, the process fluid of food to be detected may be purified and concentrated before it is mixed with the nano-enhancement material, so as to remove impurity and improve the purity of the sample to be detected. The purification process may for example be done by making the fluid pass through a column device or adding a purifying agent (for example absorbent) into it to eliminate the impurity which may disturb the pesticide residue detection (such as additives such as pigment, antiseptic or a certain compositions of the food itself). For example, the concentration process may be done by volatilizing the process fluid of the food to be detected suitably to improve the concentration of the potential pesticide residue in the process fluid for convenience of detection. In practice, the above purification and concentration processes may efficiently remove the disturbance of the impurity and control the concentration of the process fluid to improve the accuracy of pesticide residue detection.

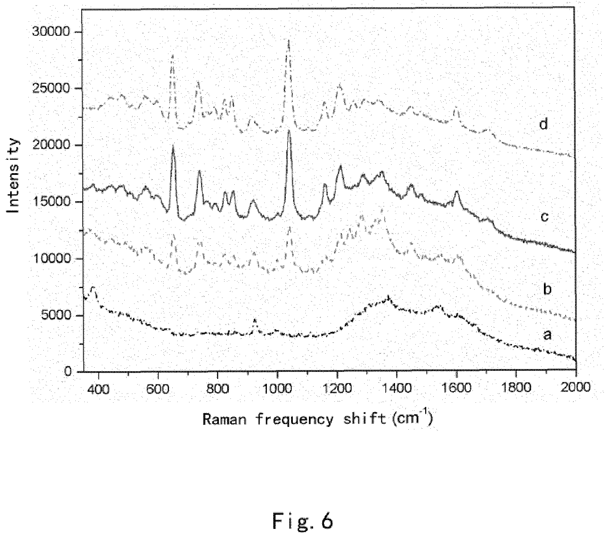

Fig. 6 shows an example of detecting the residue of pesticide of isocarbophos in the process fluid of apples according to the principle of the present invention. In Fig. 6, the curve a represents a surface enhanced (for example by enhancing nano materials) Raman spectrum of the process fluid of apples excluding pesticides. The curves b and c represent surface enhanced Raman spectra of the process fluid of apples containing 1 ppm and 10 ppm pesticides of isocarbophos. The curve d represents a surface enhanced Raman spectrum of 1 ppm pesticides of isocarbophos solution. As shown in Fig. 6, the curves d and c have the charactering peaks of pesticide isocarbophos, such as the charactering peaks at 655cm⁻¹, 743cm⁻¹ and 1043cm⁻¹. These charactering peaks are not present in the curve *a* of the process fluid of pure apple but appear in the curve d of pesticide of isocarbophos solution. Further, these charactering peaks have different peak intensities for different pesticide concentrations. In this way, the method according to the embodiment of the present invention can detect whether the process fluid of apples has pesticide residue.

The method according to the present invention is used as a method for detecting the pesticide residue in foods conveniently and fast in the field.

Although the present invention has been explained with reference to the drawings, the embodiments shown in the drawings are only illustrative, instead of limiting the present invention.

The scope of the present invention is defined in the appended claims.

## Claims

1. A pesticide residue detection method, comprising the steps:
(o) measuring (100), in the field of detecting the pesticide residue in a sample of a food system, the Raman spectra of reference samples of a plurality of different food systems containing pesticides of known compositions and different concentrations to obtain reference Raman spectra, and thereby establishing a reference Raman spectrum library, the reference Raman spectrum library including reference Raman spectra for different food systems containing pesticide residues of known compositions and different concentrations;
(a) irradiating (300) the sample of the food system to be detected by an exciting light and collecting a Raman scattered light from the sample;
(b) acquiring (400) a Raman spectrum of the sample of the food system from the collected Raman scattered light; and
(c) comparing (500) the Raman spectrum of the sample of the food system with reference Raman spectra of a sample of the same food system for known pesticides in the reference Raman spectrum library to determine composition and concentration of pesticide residue in the sample of the food system,
wherein the step (c) comprises:
(c1) extracting (501) a peak position of a characterizing peak from the Raman spectrum of the sample of the food system to be detected and comparing it with reference Raman spectra of a sample of the same food system in the reference Raman spectrum library to determine whether the sample to be detected contains a certain pesticide residue or not; and
(c2) if it is determined that the sample to be detected contains the pesticide residue, extracting (502) a peak intensity or peak area of the characterizing peak of the Raman spectrum of the sample of the food system to be detected and comparing it with the reference Raman spectra of the same food system, and thereby determining the concentration of the pesticide residue in the sample of the food system to be detected.

2. The pesticide residue detection method according to claim 1, wherein the reference Raman spectrum library for known pesticides comprises reference Raman spectra of a plurality of food systems containing pesticide residues of known compositions and concentrations and/or reference Raman spectra of a plurality of food systems excluding any pesticide residue.

3. The pesticide residue detection method according to claim 1, further comprising the following step between the step (o) and the step (a):
(p) establishing a relation table, graph or function of the concentrations of pesticide residue vs. the peak areas of the characterizing peaks in the Raman spectrum on basis of the reference Raman spectra of the reference samples containing pesticides of known compositions and concentrations.

4. The pesticide residue detection method according to any one of claims 1-3, wherein the sample of the food system to be detected is formed by mixing a process fluid of food to be detected with a nano-enhancement material.

5. The pesticide residue detection method according to claim 4, wherein the process fluid of food to be detected is produced by carrying out a crush and extraction process on the food to be detected.

6. The pesticide residue detection method according to claim 5, wherein the process fluid of food to be detected is purified and concentrated before it is mixed with the nano-enhancement material.

7. The pesticide residue detection method according to claim 5, wherein the nano-enhancement material comprises a metal nano-material, the metal comprising any one of gold, silver, copper, iron, cobalt, nickel, palladium and platinum or any combination thereof.

## Patentansprüche

1. Pestizidrückstandsnachweismethode, umfassend die folgenden Schritte:
(o) Messen (100), in dem Feld, in dem der Pestizidrückstand in einer Probe eines Lebensmittelsystems nachgewiesen wird, der Raman-Spektren von Referenzproben einer Vielzahl von verschiedenen Lebensmittelsystemen, die Pestizide bekannter Zusammensetzungen und unterschiedlicher Konzentrationen enthalten, um Raman-Referenzspektren zu erhalten, und dadurch Anlegen einer Raman-Referenzspektrumbibliothek, wobei die Raman-Referenzspektrumbibliothek Raman-Referenzspektren für verschiedene Lebensmittelsysteme einschließt, die Pestizidrückstände bekannter Zusammensetzungen und unterschiedlicher Konzentrationen enthalten;
(a) Bestrahlen (300) der Probe des nachzuweisenden Lebensmittelsystems mit einem Erregerlicht und erfassen eines Raman-Streulichts von der Probe;
(b) Erhalten (400) eines Raman-Spektrums der Probe des Lebensmittelsystems aus dem erfassten Raman-Streulicht; und
(c) Vergleichen (500) des Raman-Spektrums der Probe des Lebensmittelsystems mit Raman-Referenzspektren einer Probe desselben Lebensmittelsystems für bekannte Pestizide in der Raman-Referenzspektrumbibliothek, um die Zusammensetzung und Konzentration des Pestizidrückstands in der Probe des Lebensmittelsystems zu bestimmen,
wobei der Schritt (c) Folgendes umfasst:
(c1) Extrahieren (501) einer Peak-Position eines charakterisierenden Peaks aus dem Raman-Spektrum der Probe des nachzuweisenden Lebensmittelsystems und Vergleichen derselben mit Raman-Referenzspektren einer Probe desselben Lebensmittelsystems in der Raman-Referenzspektrumbibliothek, um zu bestimmen, ob die nachzuweisende Probe einen bestimmten Pestizidrückstand enthält oder nicht; und
(c2) wenn bestimmt wird, dass die nachzuweisende Probe den Pestizidrückstand enthält, Extrahieren (502) einer Peak-Intensität oder einer Peak-Fläche des charakterisierenden Peaks des Raman-Spektrums der Probe des nachzuweisenden Lebensmittelsystems und Vergleichen derselben mit den Raman-Referenzspektren desselben Lebensmittelsystems und dadurch Bestimmen der Konzentration des Pestizidrückstands in der Probe des nachzuweisenden Lebensmittelsystems.

2. Pestizidrückstandsnachweismethode nach Anspruch 1, wobei die Raman-Referenzspektrumbibliothek für bekannte Pestizide Raman-Referenzspektren einer Vielzahl von Lebensmittelsystemen, die Pestizidrückstände bekannter Zusammensetzungen und Konzentrationen enthalten, und/oder Raman-Referenzspektren einer Vielzahl von Lebensmittelsystemen, die keinerlei Pestizidrückstände aufweisen, umfasst.

3. Pestizidrückstandsnachweismethode nach Anspruch 1, ferner umfassend den folgenden Schritt zwischen dem Schritt (o) und dem Schritt (a):
(p) Erstellen einer Zusammenhangstabelle, -graphik oder -funktion der Konzentrationen von Pestizidrückstand gegenüber den Peak-Flächen der charakterisierenden Peaks im Raman-Spektrum auf der Grundlage der Raman-Referenzspektren der Referenzproben, die Pestizide bekannter Zusammensetzungen und Konzentrationen enthalten.

4. Pestizidrückstandsnachweismethode nach einem der Ansprüche 1-3, wobei die Probe des nachzuweisenden Lebensmittelsystems durch Mischen einer Prozessflüssigkeit des nachzuweisenden Lebensmittels mit einem Nano-Verstärkungsmaterial gebildet wird.

5. Pestizidrückstandsnachweismethode nach Anspruch 4, wobei die Prozessflüssigkeit des nachzuweisenden Lebensmittels durch Durchführen einer Zerkleinerungs- und Extraktionsmethode an dem nachzuweisenden Lebensmittel hergestellt wird.

6. Pestizidrückstandsnachweismethode nach Anspruch 5, wobei die Prozessflüssigkeit des nachzuweisenden Lebensmittels gereinigt und eingeengt wird, bevor sie mit dem Nano-Verstärkungsmaterial gemischt wird.

7. Pestizidrückstandsnachweismethode nach Anspruch 5, wobei das Nano-Verstärkungsmaterial ein Metall-Nanomaterial umfasst, wobei das Metall eines aus Gold, Silber, Kupfer, Eisen, Kobalt, Nickel, Palladium und Platin oder Kombinationen davon umfasst.

## Revendications

1. Un procédé de détection de résidu de pesticides, comprenant ces étapes :
(o) mesurer (100), dans le champ de détection du résidu de pesticides dans un échantillon d'un système alimentaire, les spectres Raman d'échantillons de référence d'une pluralité de systèmes alimentaires différents contenant des pesticides de compositions connues et de concentrations différentes pour obtenir des spectres Raman de référence, et par ce moyen établir une bibliothèque de spectres Raman de référence, la bibliothèque de spectres Raman de référence comprenant des spectres Raman de référence pour différents systèmes alimentaires contenant des résidus de pesticides de compositions connues et de concentrations différentes ;
(a) irradier (300) l'échantillon du système alimentaire devant faire l'objet d'une détection au moyen d'une lumière d'excitation et recueillir une lumière Raman diffusée à partir de l'échantillon ;
(b) acquérir (400) un spectre Raman de l'échantillon du système alimentaire à partir de la lumière Raman diffusée recueillie ; et
(c) comparer (500) le spectre Raman de l'échantillon du système alimentaire avec les spectres Raman de référence d'un échantillon du même système alimentaire pour des pesticides connus dans la bibliothèque de spectres Raman de référence afin de déterminer composition et concentration de résidu de pesticides dans l'échantillon du système alimentaire,
dans lequel l'étape (c) comprend :
(c1) extraire (501) une position de crête d'une crête caractérisante du spectre Raman de l'échantillon du système alimentaire devant faire l'objet d'une détection et la comparer avec les spectres Raman de référence d'un échantillon du même système alimentaire dans la bibliothèque de spectres Raman de référence pour déterminer si l'échantillon devant faire l'objet d'une détection contient un certain résidu de pesticides ou non ; et
(c2) s'il est déterminé que l'échantillon devant faire l'objet d'une détection contient le résidu de pesticides, extraire (502) une intensité de crête ou une zone de crête de la crête caractérisante du spectre Raman de l'échantillon du système alimentaire devant faire l'objet d'une détection et la comparer avec les spectres Raman de référence du même système alimentaire, et par ce moyen déterminer la concentration du résidu de pesticides dans l'échantillon du système alimentaire devant faire l'objet d'une détection.

2. Le procédé de détection de résidu de pesticides selon la revendication 1, dans lequel la bibliothèque de spectres Raman de référence pour des pesticides connus comprend des spectres Raman de référence d'une pluralité de systèmes alimentaires contenant des résidus de pesticides de compositions et concentrations connues et/ou des spectres Raman de référence d'une pluralité de systèmes alimentaires excluant tout résidu de pesticides.

3. Le procédé de détection de résidu de pesticides selon la revendication 1, comprenant en outre l'étape suivante entre l'étape (o) et l'étape (a) :
(p) établir un tableau, un graphe ou une fonction de correspondances des concentrations de résidu de pesticides par rapport aux zones de crête des crêtes caractérisantes dans le spectre Raman sur la base des spectres Raman de référence des échantillons de référence contenant des pesticides de compositions et concentrations connues.

4. Le procédé de détection de résidu de pesticides selon l'une des revendications 1-3, dans lequel l'échantillon du système alimentaire devant faire l'objet d'une détection est formé par le mélange d'un fluide de traitement d'aliment devant faire l'objet d'une détection avec une matière de nano-augmentation.

5. Le procédé de détection de résidu de pesticides selon la revendication 4, dans lequel le fluide de traitement d'aliment devant faire l'objet d'une détection est produit en appliquant un procédé de trituration et d'extraction sur l'aliment devant faire l'objet d'une détection.

6. Le procédé de détection de résidu de pesticides selon la revendication 5, dans lequel le fluide de traitement d'aliment devant faire l'objet d'une détection est purifié et concentré avant d'être mélangé avec la matière de nano-augmentation.

7. Le procédé de détection de résidu de pesticides selon la revendication 5, dans lequel la matière de nano-augmentation comprend une nanomatière métallique, le métal comprenant l'un quelconque parmi or, argent, cuivre, fer, cobalt, nickel, palladium et platine ou l'une quelconque de leurs combinaisons.
